# EUROPEAN PATENT SPECIFICATION

(11) **EP 0 653 328 B1**
(45) Date of publication and mention of the grant of the patent: **08.08.2001**
(21) Application number: 94308395.6
(22) Date of filing: 14.11.1994
(51) Int. Cl.: B60Q 1/44, B60Q 1/30

(54) **Signalling apparatus for road vehicles**
Signaleinrichtung für Kraftfahrzeuge
Dispositif de signalisation pour véhicule

(30) Priority: 15.11.1993 GB 9323545; 23.02.1994 GB 9403453
(43) Date of publication of application: 17.05.1995
(73) Proprietor: Gething, Kenneth Cyril, Sutton Coldfield, West Midlands B75 6SQ (GB)
(72) Inventor: Gething, Kenneth Cyril, Sutton Coldfield, West Midlands B75 6SQ (GB)
(74) Representative: Spall, Christopher John

(56) References cited:
- EP-A- 0 031 983
- EP-A- 0 299 933
- FR-A- 2 278 535
- FR-A- 2 638 408
- US-A- 3 519 987
- US-A- 3 559 164
- US-A- 4 651 129

## Description

This invention relates to improvements in signalling apparatus for road vehicles.

Currently vehicle brake lights simply indicate the fact that the brake pedal has been actuated, and do not indicate the rate of deceleration of the vehicle. This has the disadvantage that it is difficult for a driver of a vehicle to tell how hard the vehicle in front is being braked and, in consequence, for the driver to receive any indication of the rate of deceleration and therefore what effective braking distance is available to him. This often leads to accidents, particularly on motorways. There have been proposals for indicating variations in deceleration by varying the intensity or area of brake lights, in response to excessive deceleration or brake pressure, but these systems depend for their operation on the operation of the normal braking system. Also modification of at least the existing electrical circuitry is necessary for the installation of such systems. This, in turn, is expensive and requires the use of skilled labour.

We are aware of US-A-3 559 164 (Bancroft) which discloses a signalling apparatus comprising self contained unit adapted to be mounted at the rear of a vehicle including sensing means responsive to deceleration of the vehicle. The sensing means comprises a pendulum which swings in response to inertia forces generated during emergency braking to close a contact of an electrical circuit. The document does not disclose a sensing means which is responsive to the attitude of the vehicle.

According to one aspect of my invention in signalling apparatus for road vehicles comprising a self-contained unit adapted to be mounted at the rear of a vehicle, the unit including light means independent of the lights of the vehicle and visible to following vehicles and an electrical circuit, in which the electrical circuit incorporates means for supplying intermittent pulses to the light means to cause the light means to emit a flashing signal, the apparatus includes sensor means at least responsive to the deceleration of the vehicle and attitude of the vehicle independent of operation of a brake pedal so that the light means are illuminated to emit a warning signal at least when the vehicle is at an abnormal attitude.

The sensor means is adapted to energise the light means to achieve illumination when the rate of deceleration of the vehicle exceeds a predetermined value. Thus the driver of a following vehicle is given an instant and automatic warning of rapid deceleration of a vehicle ahead. Because the sensor means is at least responsive to the attitude of the vehicle, this has the advantage that should the vehicle be involved in an accident or for any other reason become out of control and come to rest in an abnormal attitude the apparatus will continue to emit its warning signal, thereby facilitating rescue in remote situations.

Since the apparatus comprises a self-contained unit it can be fitted to the vehicle simply and without any adaptation and without the use of special tools.

When the vehicle is provided with a back light, the light means is visible through the glass which constitutes the brake light itself.

The unit may define a housing for a storage battery or, in a modification, the unit may incorporate leads for connection to suitable connections to the battery of the vehicle through the existing harness.

The housing is adapted to be mounted on the back light of a vehicle and may include at least one upper or lower mounting flange adapted to be secured to the glass by a suitable adhesive means.

Conveniently one of the flanges has an outer edge of chisel outline which can be inserted under the sealing strip for the glass, and the other flange is then secured to the glass by the adhesive, which may comprise an adhesive packing strip of a thickness chosen to ensure that the unit is mounted at a chosen attitude with respect to the vehicle. The attitude may be chosen by lining up a mark at the end of the housing at a chosen angle with respect to the plane of the glass. The mark may be defined by a slit in the housing which can then be used in a similar manner to that of a gun sight.

Alternatively, and according to another aspect of my invention, in signalling apparatus for road vehicles, the housing adapted to be mounted on the back light of a vehicle includes upper and lower angularly movable hinged supports of different effective lengths by manipulation of which the unit can be mounted on the glass at a desired chosen attitude with respect to the vehicle.

Conveniently lips at upper and lower edges of the mouth of the housing each comprises at least one longitudinally extending bead of part circular outline adapted to be received within a complementary recess in the hinged support.

Normally the support at the upper lip comprises a pad, and the support at the lower lip acts as a strut, with a pad at its distal end for co-operation with the glass.

In one construction the support at the lower lip is of composite double knuckle construction comprising a substantially rigid elongate strip hingedly connected at one end to the pad, and at the opposite end slidably clamped in a connector which, in turn, is hingedly connected to the lower lip.

In another construction the housing may be carried at opposite ends from a pair of spaced brackets for attachment to the windshield.

The sensor means and the light means are mounted on a circuit board housed in the housing.

In one construction the sensor means comprises a mercury switch, responsive to deceleration and to the attitude of the vehicle. The light means comprises a plurality of horizontally arranged LEDs (light emitting diodes) which are adapted to flash simultaneously. Normally they will flash at a constant frequency. However, in a modification, the frequency may increase with increase in the rate of deceleration of the vehicle. Normally substantially five red LEDs are provided, and a single green LED may also be mounted on the housing to be visible to the driver by reflection through the rear view mirror of the vehicle, as an indication that the unit is operable.

Two embodiments of my invention is illustrated in the accompanying drawings, in which:-
Figure 1 is a transverse section through one construction of signalling apparatus for a road vehicle;
Figure 2 is a front view of the apparatus;
Figure 3 is a section on the line 3-3 of Figure 1;
Figure 4 is a circuit diagram;
Figure 5 is a transverse section similar to Figure 1 but showing a modified housing;
Figure 6 is a front elevation of the housing of Figure 5;
Figure 7 illustrates schematically the mounting of the apparatus of Figures 5 and 6 on a rear windshield of a vehicle;
Figure 8 is a plan of a fixing pad for use in the mounting illustrated in Figure 7;
Figure 9 is a side elevation of the same;
Figure 10 is a side elevation of an elongate strip used in the mounting of Figure 7;
Figure 11 is a plan of the same;
Figure 12 is a side elevation of a connector for use in the mounting of Figure 7;
Figure 13 is an end view of the same;
Figure 14 is an end view of the housing of Figures 6-13 but showing another form of mounting; and
Figure 15 is a rear elevation of the housing and bracket illustrated in Figure 14.

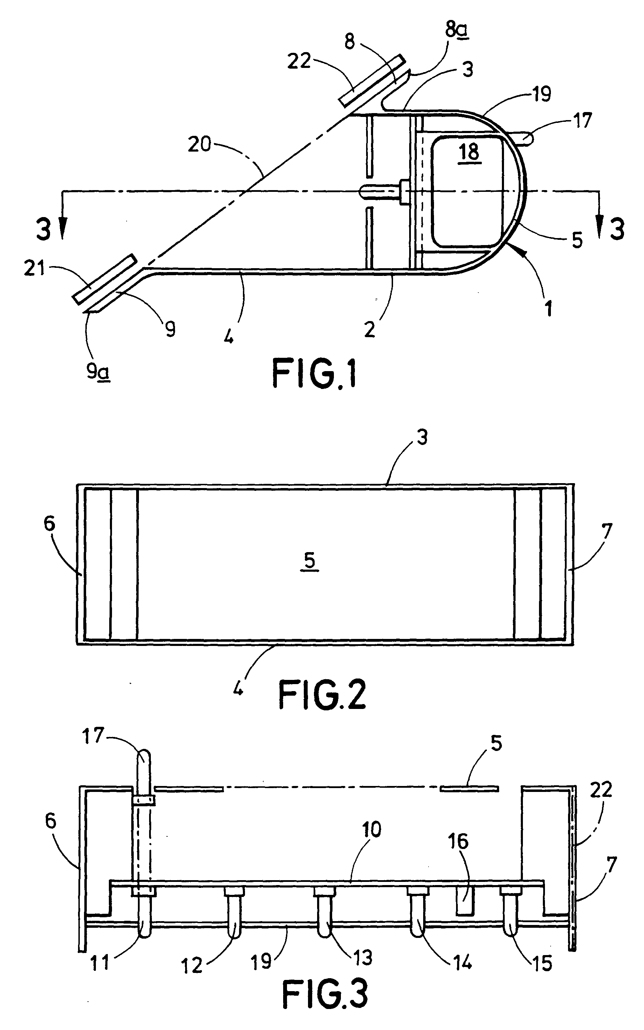

The apparatus illustrated in Figures 1-4 of the drawings is in the form of a self-contained unit comprising an elongate housing 1 in the form of a one-piece plastics mounting. The housing 1 comprises a contiguous wall 2 defining a relatively short upper wall portion 3 and a substantially longer lower wall portion 4 which are integral with an arcuate rear wall portion 5 and are spaced apart in a parallel relationship. The wall 2 is closed at opposite ends by end walls 6 and 7. The upper and lower wall portion 3 and 4 lead into oppositely directed, outwardly extending, transverse flanges 8 and 9 defining an open mouth and which extend substantially between the end walls 6 and 7 of the housing. The flanges 8 and 9 lie in a common plane inclined with respect to the upper and lower wall portions 3 and 4, and are each provided with a chisel edge 8a and 9a. An elongate circuit board 10 extending substantially between the end walls 6 and 7 of the housing defines a mounting for five red LEDs 11,12,13,14 and 15 which face the mouth, and a mercury switch 16 which is responsive both to deceleration and the attitude of a vehicle. A further LED 17 for example green in colour, projects through the arcuate rear portion 5 of the housing. A battery 18 accessible through a removable access cover 19 in the arcuate rear portion 5 is connected to the LEDs 11-15, and 17, through the mercury switch 16. The mouth may be closed by a transparent or translucent cover 19 through which the red LEDs 11-15 may project.

The unit is adapted to be mounted on the glass defining a back light 20 of a vehicle. The relative lengths of the wall portions 3 and 4 and the angle of the flanges 8 and 9 are chosen so that when the housing is in position with the flanges co-operating with the glass 20 the wall portions 3 and 4 are substantially horizontal. In this attitude the mercury switch 16 is in an "off" position.

The housing may be secured to the glass adjacent to the upper edge of the back light by inserting the upper flange 8 under the sealing strip for the glass with the assistance of the chisel edge 8a. The lower flange 9 is then secured to the glass by a suitable adhesive. An adhesive packing strip 21 may be required to ensure that the unit is mounted at the correct attitude. Should it be desired to install the housing close to the lower range of the back light, then the lower flange 9 can be inserted under the sealing strip with the upper flange 8 secured to the glass. In a modification both flanges 8 and 9 may be secured to the glass by respective adhesive strips 21 and 22.

To facilitate the mounting operation the end walls 7 of the housing may be provided with a longitudinally extending slot 22 which is parallel to the wall portions 3 and 4 and can be used for sighting purposes, in a similar manner to that of a gun sight, to determine the attitude of the housing 1.

When the unit is installed on the back light, excessive deceleration of the vehicle, either upon application of the brakes, or otherwise, for example as a result of an accident, the mercury switch 16 is actuated to energise the LEDs 11-15, and 17.

The red LEDs 11-15 flash simultaneously at a constant frequency to act as a warning to a following vehicle. They are visible for a range of approximately 1,000 metres.

The LED 17 is visible to the driver of the vehicle through the rear view mirror as an indication that the unit is operable.

The rate of deceleration at which the LEDs may become energised is chosen to suit the particular vehicle with which it is to be used.

The unit is provided in a range of housings chosen to suit the inclination of a range of vehicle back lights. In a modification the battery 18 may be omitted with the electrical energy provided by means of connections to the battery of the vehicle.

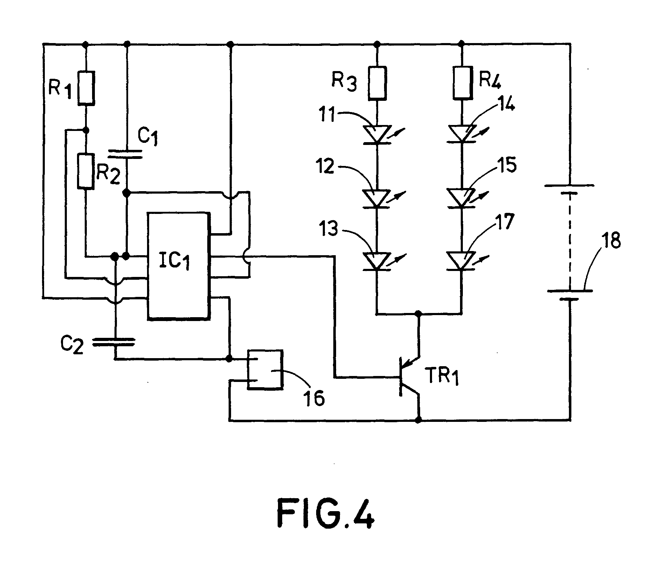

An electrical circuit is illustrated in Figure 4 of the drawings and from which it will be seen that, in this instance, the mercury switch 16 activates a circuit which flash the LEDs 11-15, and 17. However various other alternatives are available.

As illustrated in Figure 4 IC 1 is a timer chip to determine the frequency of the pulses sent to the LEDs 11-15, and 17. This may comprise a standard CMOS 555 chip.

Resistors R₁/R₂ and capacitors C₁/C₂ control the width of the pulses applied to the LEDs 11-15, and 17, and the interval between the pulses.

TR₁ is a transistor used to switch power to the LEDs 11-15, and 17, and resistors R₃/R₄ control the operating current of the LEDs 11-15, and 17.

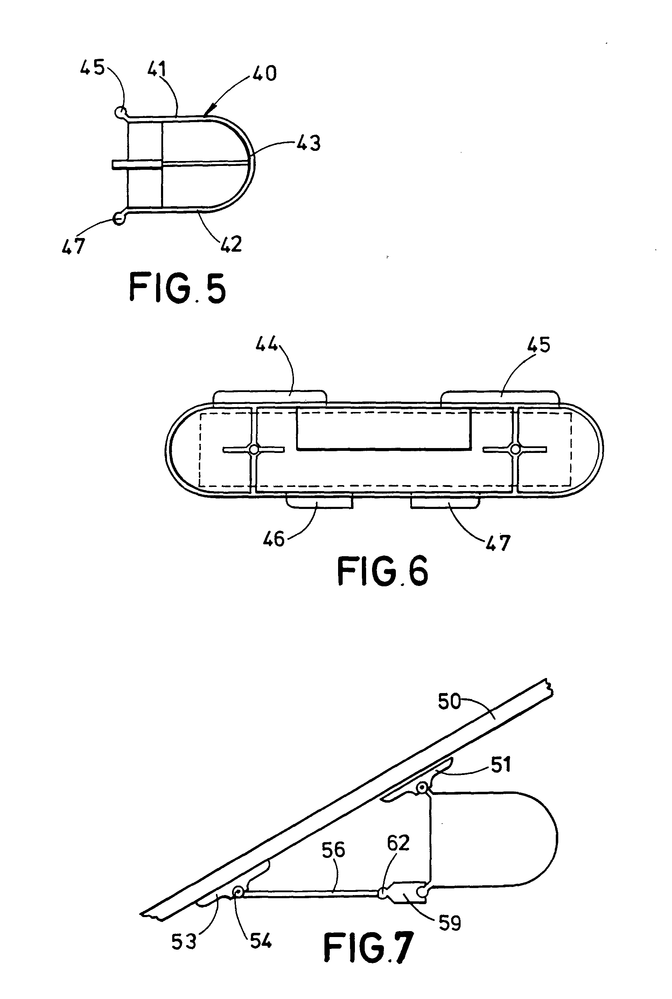

A modified housing for the apparatus is illustrated in Figures 5 and 6. As illustrated a contiguous wall 40 defines an upper wall portion 41, a lower wall portion 42, and a integral arcuate rear wall portion 43. The wall portions 41 and 42 are of equal lengths, and are symmetrically arranged in a spaced apart parallel relationship to define a mouth.

A pair of spaced beads 44, 45 of part-circular outline define a lip at the upper edge of the mouth, and a pair of spaced beads 46, 47, also of part-circular outline define a lip at the lower edge of the mouth, the beads 46, 47 being closer together than the beads 44, 45.

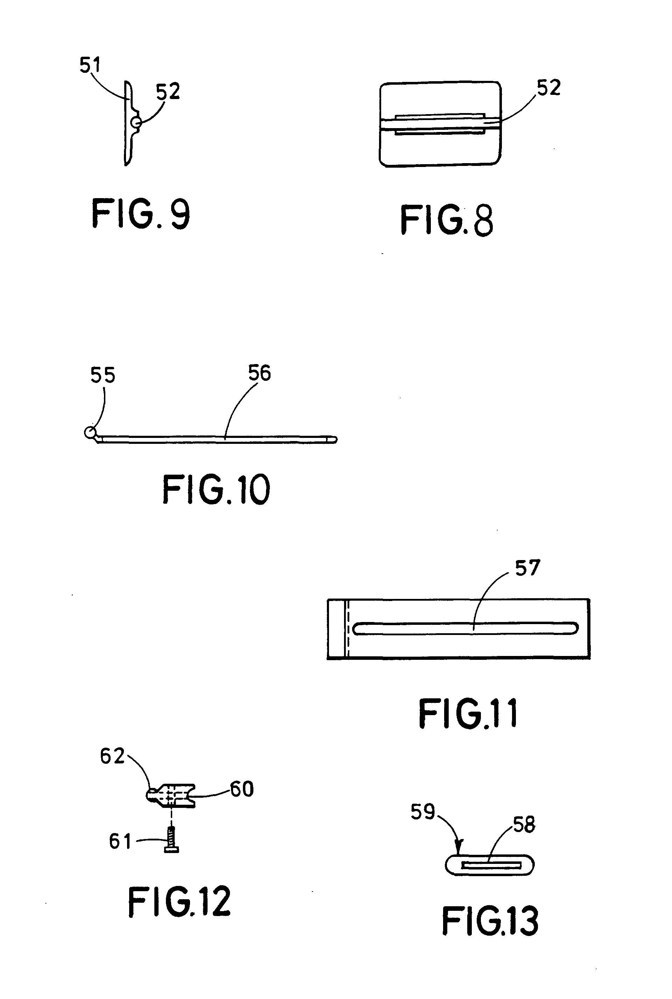

As illustrated in Figure 7, to mount the housing on an inclined rear windshield 50 of a vehicle, a pair of pads 51, each as illustrated in Figures 8 and 9, are connected to each of the beads 44 and 45, with each bead 44, 45 being slidably received in a part circular recess 52 into the pad 51 to define a hinged connection.

Similarly a pad 53 similar to the pad 51 slidably receives in its recess 54 a part-circular bead 55 at one end of an elongate substantially rigid elongate strip 56 provided with a longitudinally extending slot 57 and as illustrated in Figures 10 and 11. The strip 56 is of a width slightly smaller than the spacing between the beads 46 and 47, and is slid through a slot 58 extending longitudinally through a connector 59 illustrated in Figures 12 and 13 of the drawings and hingedly spanning the gap between the beads 46 and 47 with the beads 46 and 47 slidably received in a part circular recess 60 in one end of the connector. A grub screw 61 is adapted to be screwed through the connector 59 and the slot 57 to clamp the strip 56 and the connector 59 together against relative movement at a desired effective length compatible with maintaining the housing in a generally horizontal attitude.

Normally the two upper pads 51, and the single lower pad 53, are secured to the glass by the use of a suitable adhesive and the effective length of a strut defined by the pad 53, the strip 56, and the connector 59, is adjusted by sliding the strip through the slot 58 and then clamping it in position by the use of the screw 61. Any strip projecting from the connector 59 is accommodated between the beads 46, 47 and acts as a stop for prevent transverse movement of the housing with respect to the pad 53.

The opposite end of the connector 59 is provided with a part-circular bead 62. In a modification, therefore, when the glass inclined at a respectively small angle, the strip 56 may be omitted and the bead 62 can then be received in a recess in a pad, similar to the pad 53, to support the lower edge of the housing.

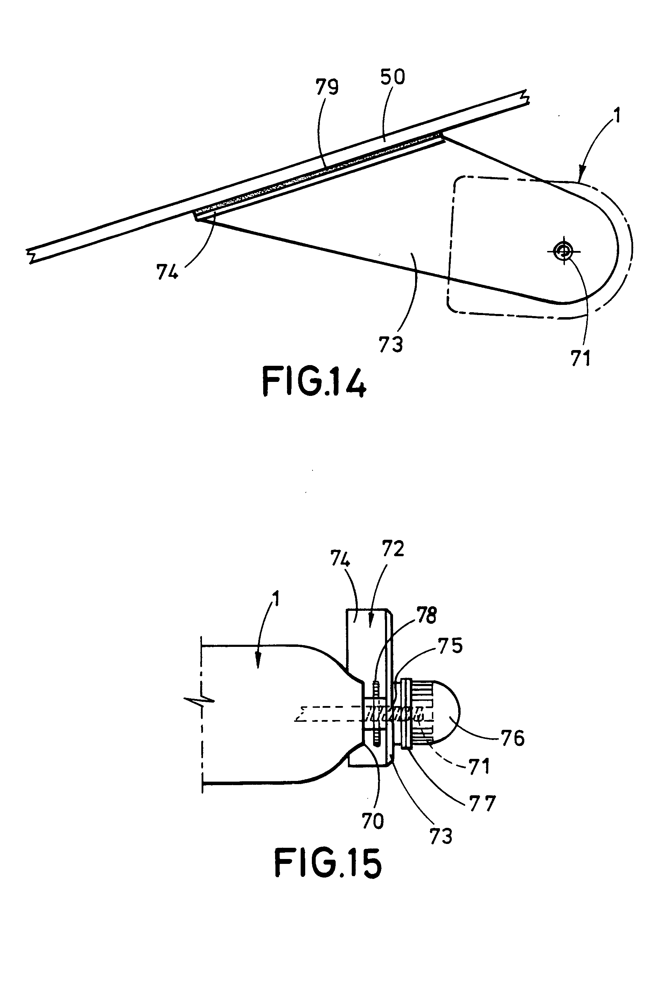

In the embodiment of Figures 14 and 15 the housing 1 is provided at each of its opposite ends with a raised flange 70 from which extends a threaded spigot 71.

An L-shaped bracket 72 comprising a mounting flange 73, and a securing flange 74 for securing to rear windshield 50 and arranged normal to the flange 72 is mounted on and at each end of the housing 1. Specifically the flange 73 is provided with an opening 75 through which the spigot 71 is passed and a knurled knob 76 is screwed onto the spigot 71. The knob 76 is adapted to clamp down a spring washer 77 against the flange 73, in turn to clamp the opposite face of the flange 73 against a friction washer 78 for co-operation with the flange 70.

The flanges 74 of the two brackets are adapted to be secured to the windshield 50, for example by means of a suitable adhesive or adhesive high tack tape 79.

After loosening the knobs 76, the attitude of the housing 1 can be adjusted with respect to the windshield, and the housing can then be clamped at a desired attitude by tightening the knobs 76 to clamp the housing 1 against movement with respect to the brackets 72.

## Claims

1. Signalling apparatus for road vehicles comprising a self-contained unit adapted to be mounted at the rear of a vehicle, the unit including light means (11, 14) independent of the lights of the vehicle and visible to following vehicles and an electrical circuit, in which the electrical circuit incorporates means (IC1) for supplying intermittent pulses to the light means to cause the light means to emit a flashing signal, characterised in that the unit further includes sensor means (16) at least responsive to the deceleration of the vehicle and attitude of the vehicle independent of operation of a brake pedal so that the light means are illuminated to emit a warning signal at least when the vehicle is at an abnormal attitude.

2. Signalling apparatus as claimed in claim 1, in which the means for supplying intermittent pulses to the light means supplies the pulses at a constant frequency.

3. Signalling apparatus as claimed in claim 1, in which the means for supplying intermittent pulses to the light means supplies the pulses at a frequency which increases with increase in the rate of deceleration of the vehicle.

4. Signalling apparatus as claimed in any preceding claim, in which the light means comprises a plurality of horizontally arranged LEDs (light emitting diodes).

5. Signalling apparatus as claimed in claim 4, in which the means for supplying intermittent pulses to the light means supplies pulses to the LEDs simultaneously to cause the LEDs to flash simultaneously.

6. Signalling apparatus as claimed in any preceding claim, in which the sensor means is adapted to energise the light means to achieve illumination when the rate of deceleration of the vehicle exceeds a predetermined value.

7. Signalling apparatus as claimed in any preceding claim, in which the means for supplying intermittent pulses to the light means comprises a timer chip.

8. Signalling apparatus as claimed in any preceding claim, in which the sensor means comprises a mercury switch responsive to deceleration and to the attitude of the vehicle.

9. Signalling apparatus as claimed in any preceding claim, in which the unit comprises a housing including a chamber for a storage battery.

10. Signalling apparatus as claimed in claim 9, in which the housing is adapted to be mounted on the back light of a vehicle and includes at least one upper or lower mounting member adapted to be secured to the glass by a suitable adhesive means.

11. Signalling apparatus as claimed in claim 9, in which the housing includes upper and lower angularly movable supports of different effective lengths by manipulation of which the unit can be mounted on the glass at a desired chosen attitude with respect to the vehicle.

12. Signalling apparatus as claimed in claim 9, in which lips at upper and lower edges of the mouth of the housing each comprises at least one longitudinally extending bead of part circuits outline adapted to be received within a complementary recess in the hinged support.

13. Signalling apparatus as claimed in claim 9, in which the housing is carried at opposite ends from a pair of spaced brackets for attachment to the windshield.

14. Signalling apparatus as claimed in claim 13, in which the body is adjusted angularly with respect to the brackets, and releasable clamping means are provided for clamping the body against angular movement with respect to the brackets.

## Patentansprüche

1. Signalisiervorrichtung für Straßenfahrzeuge, umfassend eine selbständige Einheit, geeignet zur Anbringung hinten an einem Fahrzeug, wobei die Einheit eine Lichtgebereinrichtung (11, 14) unabhängig von den Lampen des Fahrzeugs und für nachfolgende Fahrzeuge sichtbar, und eine elektrische Schaltung enthält, wobei die elektrische Schaltung eine Einrichtung (IC1) zum Zuspeisen intermittierender Impulse zu der Lichtgebereinrichtung aufweist, um diese zum Emittieren eines Blinksignals zu veranlassen, **dadurch gekennzeichnet**, daß die Einheit außerdem eine Sensoreinrichtung (16) enthält, die zumindest auf die Verzögerung des Fahrzeugs und die Lage des Fahrzeugs unabhängig von der, Betätigung eines Bremspedals anspricht, so daß die Lichtgebereinrichtung zur Ab-gabe eines Warnsignals zumindest dann zum Leuchten gebracht wird, wenn das Fahrzeug sich in einer abnormalen Lage befindet.

2. Signalisiervorrichtung nach Anspruch 1, bei der die Einrichtung zum Zuspeisen intermittierender Impulse zu der Lichtgebereinrichtung die Impulse mit konstanter Frequenz zuspeist.

3. Signalisiervorrichtung nach Anspruch 1, bei der die Einrichtung zum Zuspeisen intermittierender Impulse zu der Lichtgebereinrichtung die Impulse mit einer Frequenz zuspeist, welche bei zunehmender Beschleunigungsrate des Fahrzeugs größer wird.

4. Signalisiervorrichtung nach einem vorhergehenden Anspruch, bei der die Lichtgebereinrichtung mehrere horizontal angeordnete LEDs (Leuchtdioden) aufweist.

5. Signalisiervorrichtung nach Anspruch 4, bei der die Einrichtung zum Zuspeisen intermittierender Impulse zu der Lichtgebereinrichtung an die LEDs gleichzeitig Impulse liefert, damit die LEDs gleichzeitig blinken.

6. Signalisiervorrichtung nach einem vorhergehenden Anspruch, bei der die Sensoreinrichtung dazu ausgebildet ist, die Lichtgebereinrichtung mit Energie zu versorgen, um ein Erleuchten zu erreichen, wenn die Beschleunigungsrate des Fahrzeugs einen vorbestimmten Wert übersteigt.

7. Signalisiervorrichtung nach einem vorhergehenden Anspruch, bei der die Einrichtung zum Zuspeisen intermittierender Impulse zu der Lichtgebereinrichtung einen Timer-Chip aufweist.

8. Signalisiervorrichtung nach einem vorhergehenden Anspruch, bei der die Sensoreinrichtung einen Quecksilberschalter aufweist, der auf Beschleunigung und auf die Lage des Fahrzeugs anspricht.

9. Signalisiervorrichtung nach einem vorhergehenden Anspruch, bei der die Einheit ein Gehäuse aufweist, welches eine Kammer für eine Speicherbatterie enthält.

10. Signalisiervorrichtung nach Anspruch 9, bei der das Gehäuse dazu ausgebildet ist, an dem Rücklicht eines Fahrzeugs gehaltert zu werden, und mindestens ein oberes oder unteres Halterungselement enthält, ausgebildet, um mit geeignetem Klebemittel an dem Glas befestigt zu werden.

11. Signalisiervorrichtung nach Anspruch 9, bei der das Gehäuse eine obere und eine untere winkelbewegliche Halterung von verschiedener effektiver Länge enthält, durch deren Manipulation die Einheit sich an dem Glas in einer gewünschten, gewählten Lage bezüglich des Fahrzeugs anbringen läßt.

12. Signalisiervorrichtung nach Anspruch 9, bei der Lippen eines oberen und eines unteren Randes der Mündung des Gehäuses jeweils mindestens einen sich in Längsrichtung erstreckenden Wulst teilkreisförmigen Umrisses aufweist, ausgebildet zur Aufnahme in einer komplementären Ausnehmung in der gelenkigen Halterung.

13. Signalisiervorrichtung nach Anspruch 9, bei der das Gehause an einander entgegengesetzten Enden durch ein Paar beabstandeter Träger zur Befestigung an der Windschutzscheibe getragen wird.

14. Signalisiervorrichtung nach Anspruch 13, bei der der Körper im Winkel bezüglich der Träger justiert wird, und lösbare Klemmmittel vorgesehen sind, um den Körper gegen eine Winkelbewegung bezüglich der Träger festzuklemmen.

## Revendications

1. Dispositif de signalisation pour véhicule routier comprenant une unité autonome adaptée pour être montée à l'arrière d'un véhicule, l'unité comportant des moyens lumineux (11, 14) indépendants des moyens d'éclairage du véhicule et visibles pour des véhicules qui suivent, et un circuit électrique, dispositif dans lequel le circuit électrique intègre des moyens (ICI) d'émission de pulsations intermittentes vers les moyens lumineux de sorte que les moyens lumineux émettent un signal flash, caractérisé en ce que l'unité comporte en outre des moyens de détection (16) sensibles au moins à la décélération du véhicule et au comportement du véhicule indépendamment de l'actionnement d'une pédale de frein, de sorte que les moyens lumineux sont allumés pour émettre un signal d'avertissement au moins lorsque le véhicule présente un comportement anormal.

2. Dispositif de signalisation suivant la revendication 1, caractérisé en ce que les moyens d'émission de pulsations intermittentes vers les moyens lumineux émettent les pulsations à une fréquence constante.

3. Dispositif de signalisation suivant la revendication 1, caractérisé en ce que les moyens d'émission de pulsations intermittentes vers les moyens lumineux émettent les pulsations à une fréquence qui croît avec le rapport de décélération du véhicule.

4. Dispositif de signalisation suivant l'une quelconque des revendications précédentes, caractérisé en ce que les moyens lumineux comprennent une pluralité de LEDs (diodes électroluminescentes) disposées horizontalement.

5. Dispositif de signalisation suivant la revendication 4, caractérisé en ce que les moyens d'émission de pulsations intermittentes vers les moyens lumineux émettent des pulsations vers les LEDs de façon simultanée, de sorte que les LEDs émettent des flashs de façon simultanée.

6. Dispositif de signalisation suivant l'une quelconque des revendications précédentes, caractérisé en ce que les moyens de détection sont adaptés pour exciter les moyens lumineux, de façon à réaliser l'illumination lorsque le rapport de décélération du véhicule dépasse une valeur prédéterminée.

7. Dispositif de signalisation suivant l'une quelconque des revendications précédentes, caractérisé en ce que les moyens d'émission de pulsations intermittentes vers les moyens lumineux comprennent un composant d'horloge.

8. Dispositif de signalisation suivant l'une quelconque des revendications précédentes, caractérisé en ce que les moyens de détection comprennent un interrupteur à mercure sensible à la décélération et au comportement du véhicule.

9. Dispositif de signalisation suivant l'une quelconque des revendications précédentes, caractérisé en ce que l'unité comporte un boîtier comprenant un compartiment pour une batterie d'accumulateur.

10. Dispositif de signalisation suivant la revendication 9, caractérisé en ce que le boîtier est adapté pour être monté sur le projecteur arrière d'un véhicule et comporte au moins un organe de fixation supérieur ou inférieur adapté pour être fixé à la vitre par des moyens adhésifs adaptés.

11. Dispositif de signalisation suivant la revendication 9, caractérisé en ce que le boîtier comprend des supports supérieur et inférieur mobiles angulairement et de longueurs utiles différentes, dont la manipulation permet le montage de l'unité sur la vitre suivant une orientation désirée par rapport au véhicule.

12. Dispositif de signalisation suivant la revendication 9, caractérisé en ce que des lèvres disposées sur les bords supérieur et inférieur de l'ouverture du boîtier comprennent chacune au moins une nervure s'étendant longitudinalement d'une partie de circuit adaptée pour être reçue dans un logement complémentaire dans le support à charnière.

13. Dispositif de signalisation suivant la revendication 9, caractérisé en ce que le boîtier est porté aux extrémités opposées à partir d'une paire de pattes d'attache espacées pour sa fixation au pare-brise.

14. Dispositif de signalisation suivant la revendication 13, caractérisé en ce que le corps est ajusté angulairement par rapport aux pattes, et des moyens de verrouillage libérables sont prévus pour verrouiller le corps à l'encontre d'un mouvement angulaire par rapport aux pattes.
